# EUROPÄISCHE PATENTSCHRIFT

(11) **EP 2 193 907 B1**
(45) Veröffentlichungstag und Bekanntmachung des Hinweises auf die Patenterteilung: **18.05.2011**
(21) Anmeldenummer: 08021246.7
(22) Anmeldetag: 06.12.2008
(51) Int. Cl.: B29C 47/08, B29C 47/66, B29C 47/50, B29C 47/76, B29C 47/58

(54) **Schnecken-Maschine mit axialem Ausgleich für thermische Ausdehnung**
Screw-type machine with axial compensation for thermal expansion
Machine à vis avec compensation axiale de la expansion thermique

(43) Veröffentlichungstag der Anmeldung: 09.06.2010
(73) Patentinhaber: Coperion GmbH, 70469 Stuttgart (DE)
(72) Erfinder: Riehle, Ralf, Dipl.-Ing., 72144 Dußlingen (DE)
(74) Vertreter: Rau, Manfred

(56) Entgegenhaltungen:
- EP-A- 0 734 825
- EP-A- 1 990 176
- DE-A1-102004 051 203
- US-A- 4 004 787
- US-A1- 2006 076 705

## Beschreibung

Die Erfindung betrifft eine Schnecken-Maschine nach dem Oberbegriff des Anspruches 1.

Derartige Schnecken-Maschinen werden insbesondere bei der Inbetriebnahme von Raumtemperatur auf eine sehr hohe Betriebstemperatur von in der Regel zwischen 200°C und 300°C aufgeheizt, wodurch sich sowohl das jeweilige Gehäuse als auch die jeweilige Schnecken-Welle bzw. bei Mehr-Wellen-Maschinen die Schnecken-Wellen in Längsrichtung ausdehnen. Die jeweils an einer Abtriebs-Welle des Getriebes drehfest angebrachte Schnecken-Welle dehnt sich hierbei zu ihrer Schnecken-Spitze hin, also zum Austrags-Ende des Gehäuses hin, aus. Dies ist ohne weiteres möglich, da im Bereich zwischen der Schnecken-Spitze und dem Austrags-Ende des Gehäuses ohnehin Axial-Spiel vorhanden ist. In der Praxis ist es üblich, dass die thermisch bedingte Ausdehnung des Gehäuses dadurch kompensiert wird, dass am Austrags-Ende eine Schiebe-Verbindung vorhanden ist, wie sie beispielsweise aus der EP 0 849 065 A1 (entsprechend US 5,865,472) bekannt ist.

Aus der US 2006/0076705 A1 ist eine weitere Schnecken-Maschine nach dem Oberbegriff des Anspruches 1 bekannt, bei der es sich um einen Extruder handelt, dessen Austragsende an einem nachgeschalteten Extruder fest angebracht ist. Das Zuführende des Gehäuses des Extruders ist verschiebbar auf einer Grundplatte abgestützt. Zwischen dem Gehäuse des Extruders und einem in der Praxis als Laterne bezeichneten Ansatz-Gehäuse des Getriebes ist ein ausreichend großer Spalt ausgebildet, der Längenausdehnungen des Gehäuses des Extruders zulässt.

Aus der EP 1 990 176 A1 ist eine Schiebeverbindung in einer SchmelzeLeitung zwischen zwei Festpunkten bekannt, wobei einer der Festpunkte durch eine Mischvorrichtung gebildet ist.

Aus betriebstechnischen oder auch konstruktiven Gründen ist es oft notwendig, das Austrags-Ende des Gehäuses auch in Richtung der Längs-Achse festzulegen. Hierbei tritt dann das Problem auf, dass die axiale Ausdehnung des Gehäuses vom Getriebe und gegebenenfalls dem dahinter angeordneten Motor aufgenommen werden müssen. Hierzu werden in der Praxis aufwändige Viel-Kugel-Lager für das Getriebe und gegebenenfalls den Antriebs-Motor eingesetzt, um diese insgesamt verschiebbar zu machen.

Der Erfindung liegt die Aufgabe zugrunde, eine Schnecken-Maschine so auszugestalten, dass Längs-Ausdehnungen des Gehäuses in einfacher Weise kompensiert werden können.

Diese Aufgabe wird bei einer Schnecken-Maschine nach dem Oberbegriff des Anspruches 1 durch die Merkmale im Kennzeichnungsteil des Anspruches 1 gelöst. Der Kern der Erfindung liegt darin, dass - in Produktions-richtung der Schnecken-Maschine gesehen - unmittelbar vor dem Gehäuse, also unmittelbar vor dem Zuführ-Ende der Maschine, eine Schiebe-Verbindung ausgebildet ist, über die die thermisch bedingten Längs-Ausdehnungen des Gehäuses aufgefangen und kompensiert werden.

Vorteilhafte Ausgestaltungen ergeben sich aus den Unteransprüchen, die in jeder Kombination untereinander und mit dem Hauptanspruch einsetzbar sind.

Darüber hinaus ergeben sich weitere Merkmale, Vorteile und Einzelheiten der Erfindung aus der nachfolgenden Beschreibung eines Ausführungsbeispiels anhand der Zeichnung. Es zeigt:

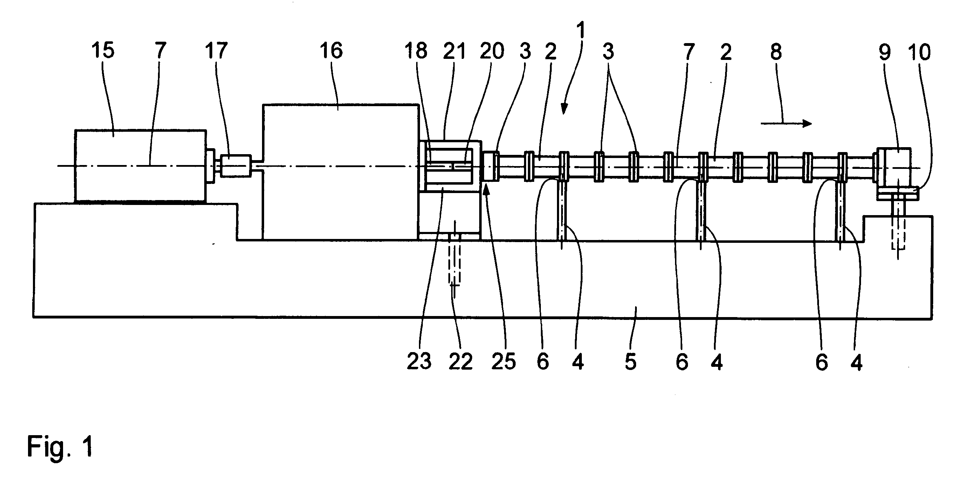

- Fig. 1: eine Seiten-Längs-Ansicht einer als Zwei-Wellen-Extruder ausgebildeten Schnecken-Maschine,
- Fig. 2: einen vertikalen Teil-Längs-Schnitt durch die Schnecken- Maschine nach Fig. 1 im Übergangs-Bereich von ihrem Ge- häuse zum Getriebe,

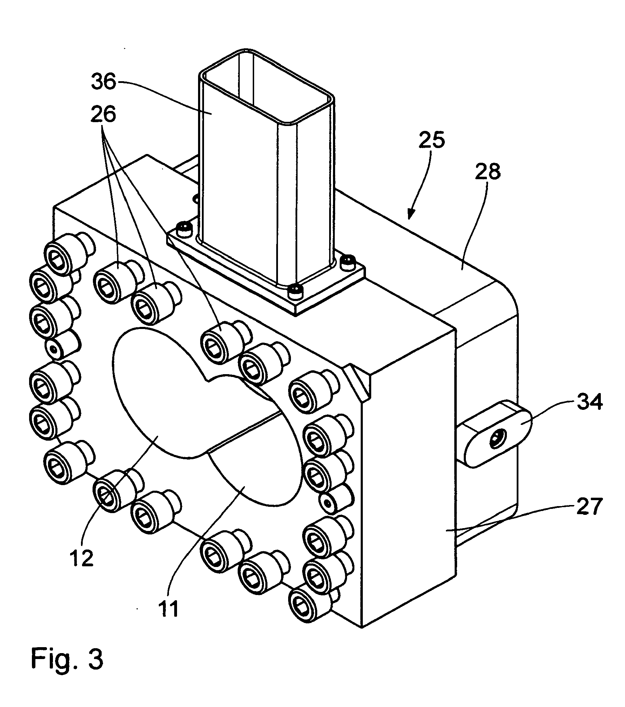

- Fig. 3: eine perspektivische Ansicht eines Adapters aus dem Über- gangs-Bereich nach Fig. 2, und

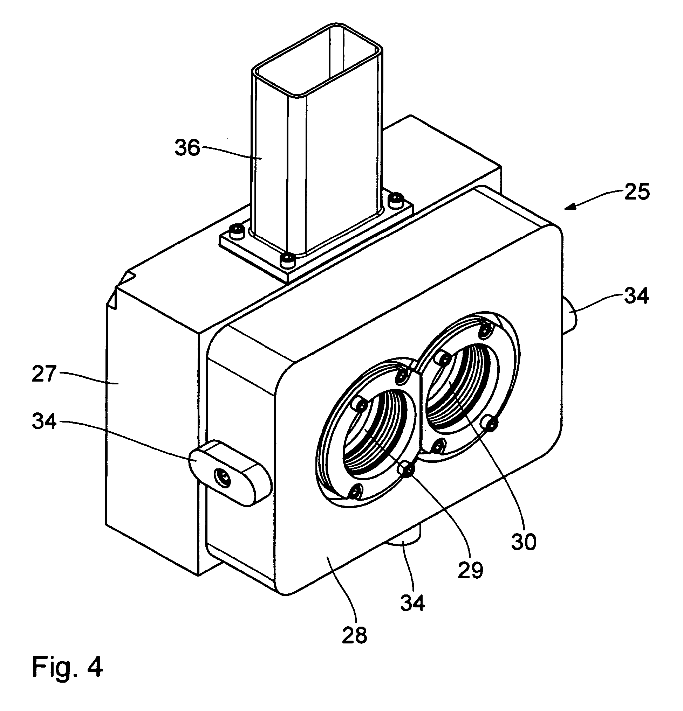

- Fig. 4: eine weitere perspektivische Ansicht des Adapters.

Bei der in der Zeichnung dargestellten Schnecken-Maschine handelt es sich um einen üblichen Extruder. Dieser weist ein Gehäuse 1 auf, das aus einzelnen Gehäuse-Abschnitten 2, sogenannten Gehäuseschüssen, zusammengesetzt ist, die mittels Flanschen 3 miteinander verbunden sind. Das Gehäuse 1 ist mittels Stützen 4 gegenüber einem Fundament 5 abgestützt, wobei zwischen den Stützen 4 und dem Gehäuse 1 Schiebe-Lager 6 ausgebildet sind, mittels derer das Gehäuse 1 in Richtung seiner Längs-Achse 7 verschiebbar ist. Die Abstützung über die Stützen 4 erfolgt also im Wesentlichen in vertikaler Richtung. Im Bereich eines in einer Produktions-Richtung 8 stromabwärtigen Austrags-Ende 9 ist das Gehäuse 1 über eine Verbindung 10 sowohl in vertikaler Richtung als auch in Richtung der Längs-Achse 7 festgelegt. Dieses Austrags-Ende 9 des Gehäuses 1 ist also ortsfest fixiert.

Die Schnecken-Maschine ist als Zwei-Wellen-Extruder ausgebildet; d. h. sie weist zwei in Richtung der zueinander parallelen Längs-Achsen 7 verlaufende, einander 8-förmig durchdringende Schnecken-Bohrungen 11, 12 auf, in denen parallel zueinander zwei Schneckenwellen 13, 14 angeordnet sind, die dichtkämmend ausgebildet sind.

Der Antrieb der Schnecken-Wellen 13, 14 erfolgt über einen Elektro-Motor 15, und ein Untersetzungs- und Verzweigungs-Getriebe 16, wobei zwischen Motor 15 und Getriebe 16 eine Kupplung 17 angeordnet ist. Die Abtriebs-Wellen 18 des Getriebes 16 sind in üblicher Weise mittels Kupplungs-Hülsen 19 mit den Antriebs-Zapfen 20 der Schnecken-Wellen 13, 14 verbunden. Diese Kupplungs-Hülsen 19 befinden sich in einem Ansatz-Gehäuse 21, einer sogenannten Laterne, des Getriebes 16. Dieses Ansatz-Gehäuse 21 ist ebenfalls mittels einer Abstützung 22 gegenüber dem Fundament 5 in vertikaler Richtung abgestützt.

Das Gehäuse 1, d. h. der dem Ansatz-Gehäuse 21 nächstliegende ein Zuführ-Ende bildende Gehäuse-Abschnitt 2, ist nicht - wie üblich - in Richtung der Längs-Achse 7 fest mit dem Ansatz-Gehäuse 21 verbunden, sondern in dessen zugewandter Stirn-Wand 23 mittels einer Schiebe-Verbindung 24 in Richtung der Längs-Achse 7 verschiebbar geführt und senkrecht hierzu, also in vertikaler und horizontal quer zur Längs-Achse 7 verlaufender Richtung, fest abgestützt.

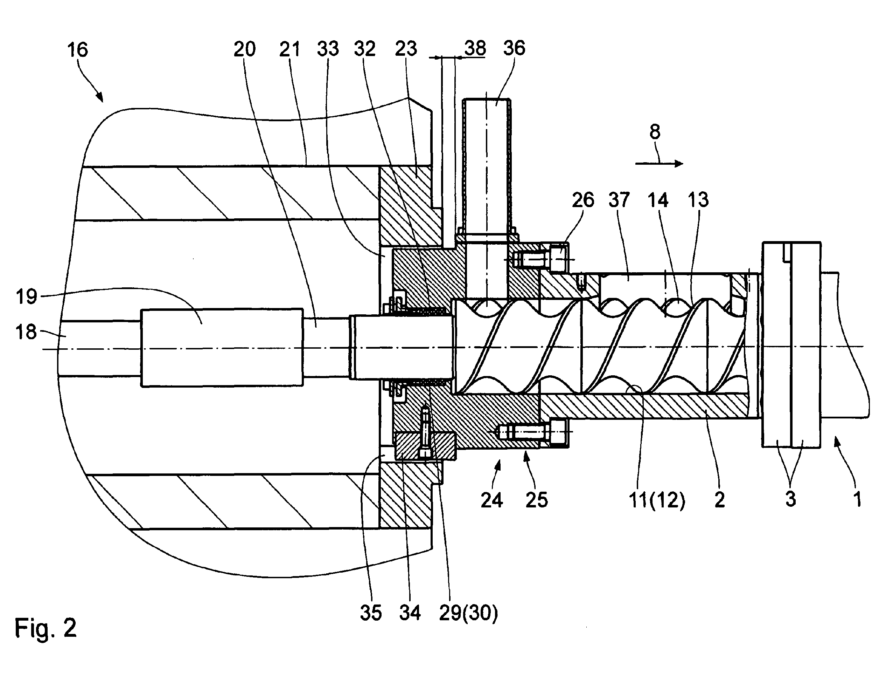

Hierzu ist am Flansch 3 des erwähnten dem Ansatz-Gehäuse 21 benachbarten Gehäuse-Abschnitt 2 ein Adapter 25 mittels Schrauben 26 befestigt. Der Adapter 25 weist zwei Abschnitte auf, nämlich einen dem benachbarten Gehäuse-Abschnitt 2 benachbarten Schnecken-Bohrungs-Abschnitt 27 und einen Lager-Abschnitt 28. Im Schnecken-Bohrungs-Abschnitt 27, der mittels der Schrauben 26 mit dem benachbarten Gehäuse-Abschnitt 2 verbunden wird, sind die jeweiligen Anfänge der Schnecken-Bohrungen 11, 12 ausgebildet, in die - wie Fig. 2 entnehmbar ist - die Schnecken-Wellen 13, 14 hineinragen. Im Lager-Abschnitt 28 sind Lager-Bohrungen 29, 30 ausgebildet, in denen die Antriebs-Zapfen 20 der Schnecken-Wellen 13, 14 drehbar gelagert und mittels Dichtungen 32, beispielsweise Stopfbuchs-Packungen, abgedichtet sind.

Der Lager-Abschnitt 28 ist in einer angepassten Lager-Öffnung 33 in der Stirn-Wand 23 des Ansatz-Gehäuses 21 in Richtung der Achse verschiebbar gelagert, senkrecht hierzu aber abgestützt. Zusätzlich sind am Lager-Abschnitt 28 Pass-Federn 34 angebracht, die in entsprechenden FührungsNuten 35 in der Stirn-Wand 23 geführt sind.

Aus den Schnecken-Bohrungen 11, 12 im Schnecken-Bohrungs-Abschnitt 27 des Adapters 25 mündet ein Rückwärtsentgasungs-Kanal 36 aus. In Produktions-Richtung 8 unmittelbar dahinter ist im ersten benachbarten Gehäuse-Abschnitt eine Zufuhr-Öffnung 37 für das in der Schnecken-Maschine aufzubereitende oder zu bearbeitende Material ausgebildet.

Der Wirkungsmechanismus ist folgender:
Insbesondere durch das Aufheizen während der Inbetriebnahme dehnen sich die Schnecken-Wellen 13, 14 einerseits und das Gehäuse 1 andererseits aufgrund der starken Temperaturerhöhung von Raumtemperatur auf Temperaturen über 200°C und gegebenenfalls sogar über 300°C stark aus.
Die in üblicher Weise gegenüber dem Getriebe 16 in Richtung der Längs-Achse 7 festgelegten Schnecken-Wellen 13, 14 dehnen sich in Richtung zum Ende 9 des Gehäuses 1, d. h. in Richtung zu ihren nicht dargestellten Schnecken-Spitzen, aus, wie dies allgemein üblich ist. Das Gehäuse 1 ist im Bereich seines Austrags-Endes 9 so ausgebildet, dass die Schnecken-Wellen 13, 14 sich im Gehäuse 1 zu dessen Ende hin ausdehnen können.
Das Gehäuse 1 dagegen dehnt sich aufgrund der geschilderten Ausgestaltung in Richtung zum Getriebe 16 hin aus, wobei das maximale Axial-Spiel 38 zwischen dem Schnecken-Bohrungs-Abschnitt 27 und der Stirn-Wand 23 so groß bemessen ist, dass der Lager-Abschnitt 28 sich in ausreichendem Maß in der Lager-Öffnung 33 zum Getriebe 16 hin verschieben kann.

## Patentansprüche

1. Schnecken-Maschine,
- mit einem Gehäuse (1), das
-- ein Zuführ-Ende,
-- ein Austrags-Ende (9) und
-- eine Zuführ-Öffnung (37) am Zuführ-Ende aufweist,
- mit mindestens einer im Gehäuse (1) ausgebildeten Schnecken-Bohrung (11, 12) mit einer Längs-Achse (7),
- mit einer in der Schnecken-Bohrung (11, 12) drehbar angeordneten Schnecken-Welle (13, 14),
- mit einem Antriebs-Motor (15),
- mit einem mit dem Antriebs-Motor (15) in Antriebsverbindung stehenden Getriebe (16),
-- das eine mit der Schnecken-Welle (13, 14) verbundene Abtriebs-Welle (18) aufweist,
wobei zwischen dem Gehäuse (1) und dem Getriebe (16) eine Schiebe-Verbindung (24) in Richtung der Längs-Achse (7) ausgebildet ist, **dadurch gekennzeichnet, dass** die Schiebe-Verbindung (24) einen Adapter (25) aufweist, der einen mit dem Gehäuse (1) verbundenen Schnecken-Bohrungs-Abschnitt (27) und einen dem Getriebe (16) zugewandten Lager-Abschnitt (28) aufweist,
dass am Getriebe (16) ein die Abtriebs-Welle (18) umgebendes Ansatz-Gehäuse (21) vorgesehen ist, das eine das Gehäuse (1) quer zur Längs-Achse (7) abstützende Lager-Öffnung (33) aufweist, und dass der Lager-Abschnitt (28) des Adapters (25) in der Lager-Öffnung (33) in Richtung der Längs-Achse (7) verschiebbar abgestützt ist.

2. Schnecken-Maschine nach Anspruch 1, **dadurch gekennzeichnet, dass** die Schnecken-Welle (13, 14) in Richtung der Längs-Achse (7) unverschiebbar mit der Abtriebs-Welle (18) verbunden ist.

3. Schnecken-Maschine nach Anspruch 1 oder 2, **dadurch gekennzeichnet,**
**dass** die Schnecken-Welle (13, 14) bis in den Schnecken-Bohrungs-Abschnitt (27) des Adapters (25) hineinragt.

4. Schnecken-Maschine nach einem der Ansprüche 1 bis 3, **dadurch gekennzeichnet,**
**dass** ein Antriebs-Zapfen (20) der Schnecken-Welle (13, 14) in einer Lager-Bohrung (29, 30) des Adapters (25) gelagert ist.

5. Schnecken-Maschine nach einem der Ansprüche 1 bis 4, **dadurch gekennzeichnet,**
**dass** das Austrags-Ende (9) des Gehäuses (1) in Richtung der Längs-Achse (7) festlegbar ist.

6. Schnecken-Maschine nach einem der Ansprüche 1 bis 5, **dadurch gekennzeichnet,**
**dass** sie als Zwei-Wellen-Extruder ausgebildet ist.

## Claims

1. Screw machine
- with a housing (1), which
-- has a supply end,
-- a discharge end (9) and
-- a supply opening (37) at the supply end,
- with at least one screw bore (11, 12), which is located in the housing (1), with a longitudinal axis (7),
- with a screw shaft (13, 14) rotatably arranged in the screw bore (11, 12),
- with a drive motor (15),
- with a gear (16),
-- which is in drive connection with the drive motor (15),
-- and has an output shaft (18) connected to the screw shaft (13, 14),
wherein a slide connection (24) is arranged between the housing (1) and the gear (16) in the direction of the longitudinal axis (7), **characterized**
**in that** the slide connection (24) has an adapter (25), which has a screw bore portion (27) connected to the housing (1) and a bearing portion (28) facing the gear (16),
**in that** an attachment housing (21) surrounding the output shaft (18) is provided on the gear (16) and has a bearing opening (33) supporting the housing (1) transversely with respect to the longitudinal axis (7), and
**in that** the bearing portion (28) of the adapter (25) is displaceably supported in the bearing opening (33) in the direction of the longitudinal axis (7).

2. Screw machine according to claim 1, **characterized in that** the screw shaft (13, 14) is non-displaceably connected to the output shaft (18), in the direction of the longitudinal axis (7).

3. Screw machine according to claim 1 or 2, **characterized in that** the screw shaft (13, 14) projects into the screw bore portion (27) of the adapter (25).

4. Screw machine according to one of claims 1 to 3, **characterized in that** a drive journal (20) of the screw shaft (13, 14) is mounted in a bearing bore (29, 30) of the adapter (25).

5. Screw machine according to one of claims 1 to 4, **characterized in that** the discharge end (9) of the housing (1) is fixable in the direction of the longitudinal axis (7).

6. Screw machine according to one of claims 1 to 5, **characterized in that** it is a two-shaft extruder.

## Revendications

1. Machine à vis comportant
- un boîtier (1) qui présente
-- une extrémité d'alimentation,
-- une extrémité de déversement (9) et
-- une ouverture d'alimentation (37) sur l'extrémité d'alimentation,
- au moins un perçage pour vis (11, 12) réalisé dans le boîtier (1) avec un axe longitudinal (7),
- un arbre pour vis (13, 14) disposé de manière rotative dans le perçage pour vis (11, 12),
- un moteur d'entraînement (15),
- un engrenage (16) en liaison d'entraînement avec le moteur d'entraînement (15),
-- qui présente un arbre de sortie (18) relié à l'arbre pour vis (13, 14),
une liaison coulissante (24) étant réalisée en direction de l'axe longitudinal (7) entre le boîtier (1) et l'engrenage (16),
**caractérisée en ce**
**que** la liaison coulissante (24) présente un adaptateur (25) comportant une section de perçage pour vis (27) reliée au boîtier (1) et une section de palier (28) tournée vers l'engrenage (16),
en ce qu'un boîtier additionnel (21) entourant l'arbre de sortie (18) est prévu sur l'engrenage (16), lequel présente une ouverture de palier (33) supportant le boîtier (1) transversalement à l'axe longitudinal (7), et
en ce que la section de palier (28) de l'adaptateur (25) est en appui de manière mobile dans l'ouverture de palier (33) en direction de l'axe longitudinal (7).

2. Machine à vis selon la revendication 1, **caractérisée en ce**
**que** l'arbre pour vis (13, 14) est relié de manière immobile à l'arbre de sortie (18) en direction de l'axe longitudinal (7).

3. Machine à vis selon la revendication 1 ou 2, **caractérisée en ce**
**que** l'arbre pour vis (13, 14) pénètre jusque dans la section de perçage pour vis (27) de l'adaptateur (25).

4. Machine à vis selon l'une quelconque des revendications 1 à 3, **caractérisée en ce**
**qu'**un tourillon d'entraînement (20) de l'arbre pour vis (13, 14) est logé dans un perçage de palier (29, 30) de l'adaptateur (25).

5. Machine à vis selon l'une quelconque des revendications 1 à 4, **caractérisée en ce**
**que** l'extrémité de déversement (9) du boîtier (1) peut être fixée en direction de l'axe longitudinal (7).

6. Machine à vis selon l'une quelconque des revendications 1 à 5, **caractérisée en ce**
**qu'**elle est réalisée comme une extrudeuse à deux arbres.
